**Europäisches Patentamt**

**European Patent Office**

**Office européen des brevets**

(19)

(11) Veröffentlichungsnummer: **0 222 990 B1**

# EUROPÄISCHE PATENTSCHRIFT

(12)

(45) Veröffentlichungstag der Patentschrift:
28.12.88

(51) Int. Cl.⁴: **B 60 J 5/04**

(21) Anmeldenummer: **86111724.0**

(22) Anmeldetag: **25.08.86**

(54) **Türsystem für Kraftfahrzeuge.**

(30) Priorität: **19.10.85 DE 3537303**

(43) Veröffentlichungstag der Anmeldung:
**27.05.87 Patentblatt 87/22**

(45) Bekanntmachung des Hinweises auf die Patenterteilung:
**28.12.88 Patentblatt 88/52**

(84) Benannte Vertragsstaaten:
**DE FR GB IT NL SE**

(56) Entgegenhaltungen:
**WO-A-81/03467**
**DE-A- 2 127 724**
**DE-A- 3 004 897**
**DE-A- 3 104 681**
**DE-A- 3 209 052**

(73) Patentinhaber: **Dr.Ing.h.c. F. Porsche Aktiengesellschaft, Porschestrasse 42, D-7000 Stuttgart 40 (DE)**

(72) Erfinder: **Eger, Georg, Wilhelm-Busch-Strasse 23, D-7141 Hochdorf (DE)**
Erfinder: **Srock, Rainer, Im Greutle 2, D-7250 Leonberg (DE)**

**Beschreibung**

Die Erfindung bezieht sich auf ein Türsystem nach dem Oberbegriff des Anspruchs 1.

Bekannte Fahrzeugtüren bestehen aus einer einteiligen Innenwand und einer einteiligen Aussenwand, wobei diese Aussenwand jeweils unlösbar mit dem Türkörper verbunden wird. Die Innenwand ist mit Montageöffnungen zum Einführen von Fensterheberteilen in den Raum zwischen der Innen- und Aussenwand versehen. Diese Öffnungen sind relativ klein bemessen, so das der Einbau der Fensterheberteile mit dem Fenster zeitraubend und arbeitsaufwendig ist. Nach dem Einbau wird die Innenwand noch über eine Verkleidung oder dergleichen abgedeckt. Weitere bekannte Fahrzeugtüren weisen Aggregateträger auf (DE-A-3 209 052), die ausserhalb der Tür mit den Fensterheberteilen verbunden und derart bestückt in die Tür eingebaut werden. Mit einem derartigen Türaufbau wird zwar die zeitraubende und arbeitsaufwendige Montage bei der Herstellung der Tür vermieden, aber bei einer Reparatur sind stets aufwendige Auf- und Abrüstarbeiten erforderlich, um den Fensterheber und/oder die Scheibe bzw. weitere Einbauteile zu reparieren und/oder zu ersetzen.

Aufgabe der Erfindung ist es, ein Türsystem zu schaffen, das eine einfache Montage von Einbauaggregateteilen gewährleistet und einen automatisch montierbaren und roboter-schweissbaren Basiskörper aufweist, der leichtbauend und in einfacher Weise aufrüst- bzw. bei Reparaturen wieder abrüstbar sein soll.

Diese Aufgabe wird erfindungsgemäss durch die kennzeichnenden Merkmale des Anspruchs 1 gelöst. Weitere vorteilhafte Ausbildungen der Erfindung beinhalten die Unteransprüche.

Die mit der Erfindung hauptsächlich erzielten Vorteile bestehen darin, dass ein Tür-Basiskörper gebildet wird, dessen Teile durch Roboter-Montage zusammensetzbar und stoffschlüssig miteinander verbindbar sind. Durch eine Schalenbauweise der einzelnen den Basiskörper bildenden Teile sowie einer gezielten Dimensionierung dieser Teile, wird eine leichtbauende Tür geschaffen, welche die vorgegebenen Festigkeitsanforderungen auf Torsion und Biegung erfüllt. Dieser Türbasiskörper bildet eine von beiden Seiten gut zugängliche Basisstruktur zur Montage und Demontage von Aggregateteilen innerhalb der Tür wie Fensterhebereinrichtung, Scheibe und dergleichen Bauteile. Diese Teile sind sofort in ihrer endgültigen Position ohne Nachrüstarbeiten einbaubar, wobei das Zuführen und Befestigen dieser Teile aufgrund der freien Zugänglichkeit zum Anbringungsort durch Roboter-Montage erfolgen kann. Durch das mit allen Teilen wie Armlehne, Lautsprecher usw. komplettierte Türinnenteil und durch das Türaussenteil ist es bei einer Reparatur in einfacher Weise möglich, die manuelle oder auch eine motorgetriebene Fensterhebeeinrichtung zu ersetzen, ohne dass aufwendige Abrüstarbeiten wie z.B. Abbau der Armlehne oder sonstige Bauteile durchgeführt werden müssen. Auch wird bei einer Beschädigung des unteren Türaussenteils ein leichtes Auswechseln dieses Türteils erreicht, wodurch ohne Aufwand und reparaturfreundlich ein Ersatz möglich ist.

Da das Türinnenteil und das untere Türaussenteil nicht wesentlich zur Stabilität der Tür beitragen müssen, können diese Teile leicht dimensioniert und darüber hinaus aus Kunststoff hergestellt werden.

Eine zusätzliche Längsversteifung der Türaussenteile wird durch eine Rammschutzleiste erzielt, die unterhalb einer Stosskante zwischen den beiden Aussenteilen vorgesehen ist und gleichzeitig einen Seitenaufprall absichert. Zur optischen Abdeckung der zwischen den beiden Türaussenteilen gebildeten Stosskante ist eine elastische Leiste vorgesehen.

Ein Ausführungsbeispiel der Erfindung ist in der Zeichnung dargestellt und wird im folgenden näher beschrieben.

Es zeigt:

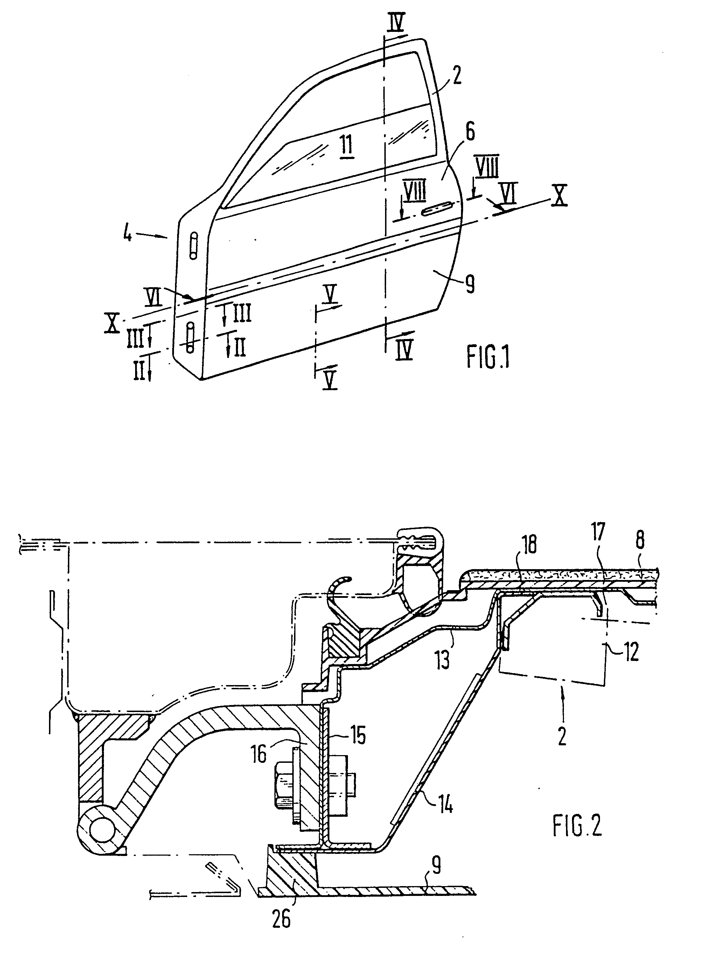

Fig. 1 eine schematisch dargestellte Tür mit den durchgeführten Horizontal- und Vertikalschnitten,

Fig. 2 einen Horizontalschnitt durch die Tür im Scharnierbereich gemäss der Linie II-II der Fig. 1,

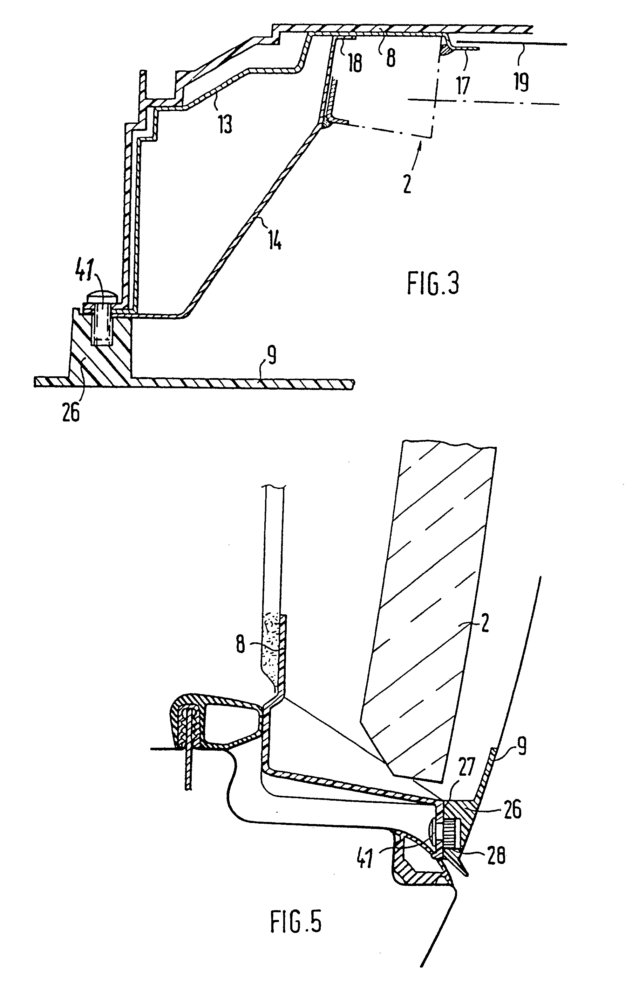

Fig. 3 einen Horizontalschnitt durch die Tür oberhalb des unteren Scharniers gemäss der Linie III-III der Fig. 4,

Fig. 4 einen Vertikalschnitt durch die Tür gemäss der Linie IV-IV der Fig. 1,

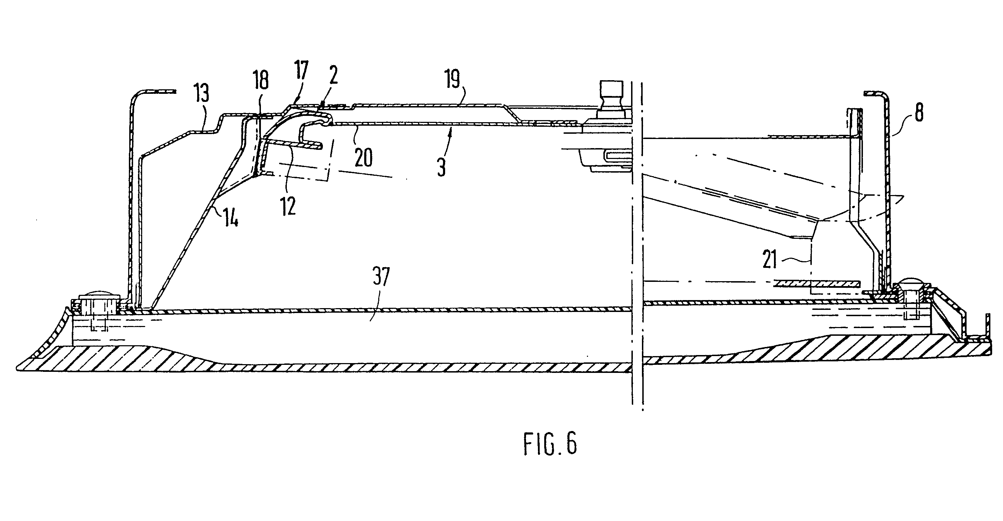

Fig. 5 einen Vertikalschnitt durch die Tür im Bereich der Türunterkante gemäss der Linie V-V der Fig. 1,

Fig. 6 einen Horizontalschnitt durch die Tür im Bereich der Rammschutzleiste gemäss der Linie VI-VI der Fig. 1,

Fig. 7 eine Explosionsdarstellung der Tür mit ihren Einzelelementen, und

Fig. 8 einen Horizontalschnitt durch die Tür im Bereich des Schlosses nach der Linie VIII-VIII der Fig. 1.

Das Türsystem umfasst im wesentlichen zwei Baugruppen, wobei die erste Türbaugruppe einen Basiskörper 1 umfasst, dessen Einzelteile stoffschlüssig miteinander verbunden sind. Diese Einzelteile bestehen im wesentlichen aus einem Türrahmen 2, einem Querträger 3, einer Scharniersäule 4, einer Schlosssäule 5, einem oberen Türaussenteil 6 und einem Türschachtträger 7. Die zweite Türbaugruppe umfasst im wesentlichen ein Türinnenteil 8 und ein unteres Türaussenteil 9, das in einer Längsebene X-X vom oberen Türaussenteil getrennt ist. Die Verbindung dieser zweiten Türbaugruppe mit der ersten Türbaugruppe erfolgt über eine lösbare Befestigung. Zwischen den Türteilen 8 und 6, 9 ist am Querträger 3 eine Fensterhebereinrichtung 10 und in dieser eine Scheibe 11 gehalten.

Der Basiskörper 1 der ersten Türbaugruppe bildet eine stabile nach aussen offene Tragstruktur. Sie ist zusammengesetzt aus dem Türrahmen 2, an dem die weiteren Einzelteile 3 bis 7 des Türsystems befestigt sind. So ist am vornliegenden Schenkel 12 des Türrahmens 2 die Scharniersäule 4 befestigt, welche zwei zu einem Kastenträger verbundene Halbschalen 13 und 14 umfasst. Innerhalb der Säule 4 ist eine Verstärkung 15 zur Haltung eines Scharniers 16 vorgesehen. Ein Halteschenkel 17 der Halbschale 13 ist über seinen Verbindungsort 18 an der innenliegenden Halbschale 14 hinausgeführt und mit einer inneren Halbschale 19 des Querträgers 3 sowie mit dem Türrahmen 2 verbunden, wogegen die äussere Halbschale 20 des Querträgers 3 an den beiden Schenkeln 12 und 21 abgestützt ist. Der Querträger 3 dient zur Aufnahme der Fensterhebereinrichtung 10.

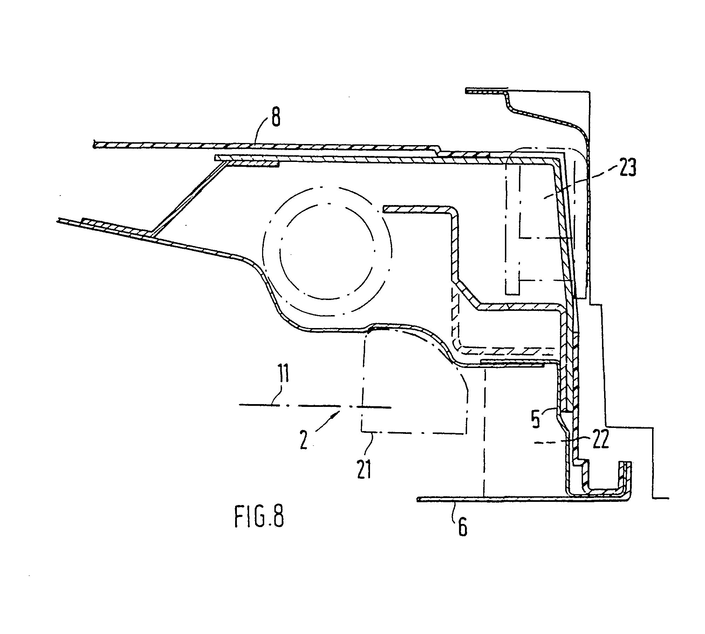

Mit dem Schenkel 21 des Türrahmens 2 und der inneren Halbschale 19 des Querträgers ist desweiteren die Schlosssäule 5 verbunden. Ein Schliesszylinder 22 ist zwischen dem oberen Türaussenteil 6 und der Schlosssäule 5, die einschalig ausgeführt ist, gehalten. Ein Schliesskeil 23 des Schlosses ist in Fig. 8 angedeutet.

Nachdem diese Einzelteile wie Scharniersäule 4, Schlosssäule 5 und Querträger 3 stoffschlüssig mit dem Türrahmen 2 verbunden sind, wird an das obere Türaussenteil 6 der Türschachtträger 7 angesetzt. Dieser besteht im wesentlichen aus zwei miteinander verbundenen Halbschalen 24 und 25, wobei die äussere Halbschale 25 flächig an der Innenseite des oberen Türaussenteils 6 geklebt ist. Dieses Türaussenteil 6 sowie der Türschachtträger 7 sind endseitig ebenfalls stoffschlüssig mit dem Türrahmen 2 verbunden und bilden eine einteilige Baueinheit mit diesem und den anderen Türeinzelteilen 3 bis 5. Die Baueinheit ist von beiden Seiten her zugänglich, so dass eine Montage von in der Tür liegenden Baugruppen, z.B. der Fensterhebereinrichtung 10, einfach möglich wird.

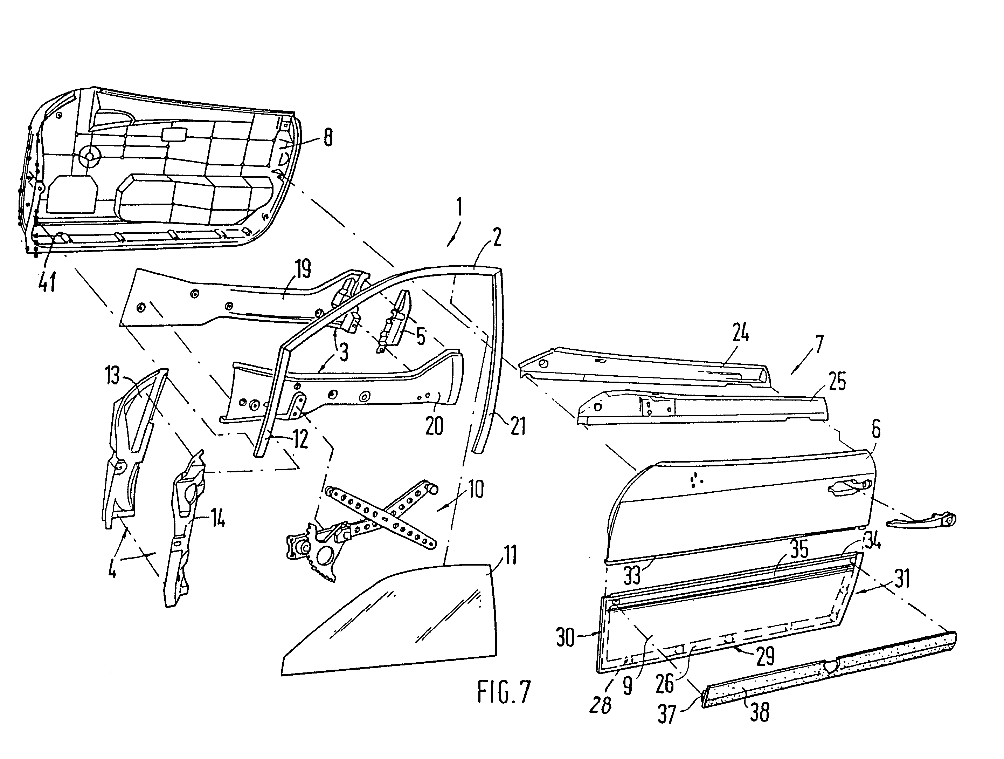

Nach dem Einbau dieser Aggregatteile wird die Tür durch die zweite Baugruppe gemeinsam durch das Türinnenteil 8 und das untere Türaussenteil 9 kapselnd umschlossen. Das Türinnenteil 8 besteht vorzugsweise aus einer Kunststoffschale und wird mit dem unteren, ebenfalls aus Kunststoff bestehenden Türaussenteil 9 über Schraubmittel lösbar verbunden. Hierzu weist das untere Türaussenteil 9 eine angeformte Randleiste 26 auf, die eine umlaufende Anlagefläche 27 für das Türinnenteil 8 bildet und die Befestigungsmuttern 28 oder dergleichen Mittel zum Festsetzen der Schrauben 41 aufweist. Auch kann eine Dichtung in der Leiste 26 vorgesehen sein. Insbesondere ist die Randleiste 26 in einem horizontalen Befestigungsabschnitt 29 und vertikalen Befestigungsabschnitten 30 und 31 vorgesehen, was in Fig. 7 näher dargestellt ist.

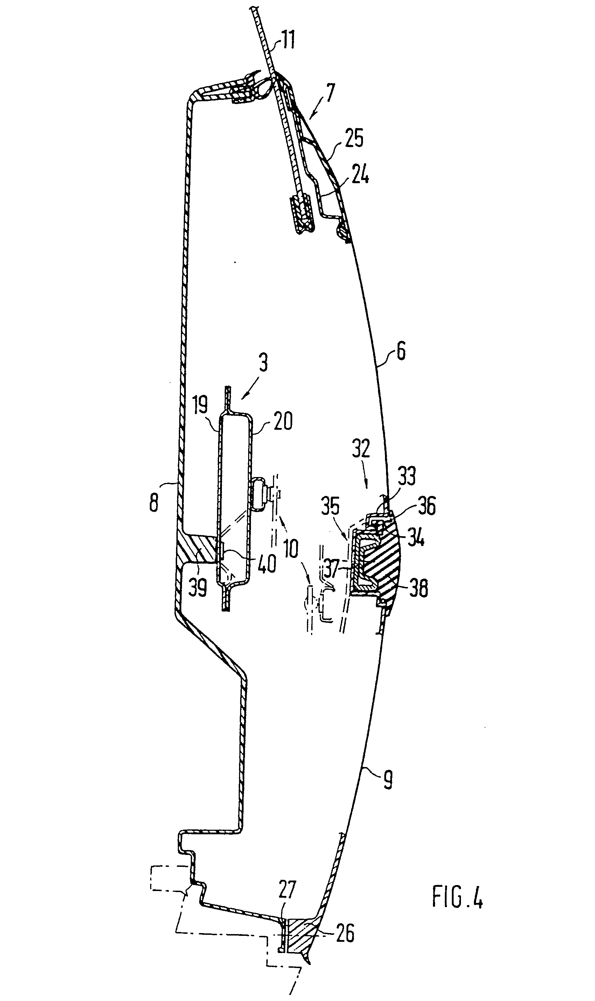

Das untere lösbare Türaussenteil 9 ist vom fest verbundenen oberen Türaussenteil 6 etwa im Bereich der grössten Fahrzeugbreite in Längsrichtung geteilt ausgeführt. Über eine Halteeinrichtung 32, die aus zwei ineinandergreifenden U-profilförmigen Verbindungsleisten 33, 34 besteht, wird eine quasi formschlüssige Verbindung geschaffen. Zwischen diesen Leisten kann eine elastische Dichtung, z.B. aus Gummi oder dergleichen, angeordnet sein. Unterhalb dieser Halteeinrichtung 32, unmittelbar anschliessend an die Verbindungsleiste 34, ist eine nach innen verlagerte Rinne 35 vorgesehen. In dieser ist eine aus einem biegesteifen Träger bestehende Rammschutzleiste 37 gehalten, die nach aussen hin über eine elastische Leiste 38 abgedeckt ist. Diese erstreckt sich über die Stosskante 36 der beiden Türaussenteile 6 und 9 hinaus (Fig. 4). die Rammschutzleiste 37 ist jeweils endseitig mit den Türteilen 8 und 9 verschraubt und stützt sich am Türbasiskörper ab.

Das Türinnenteil 8 weist in Höhe des Querträgers 3 Abstandsnocken 39 auf, in denen durch die Halbschale 19 des Querträgers 3 gezogene Schrauben 40 zum Festlegen des Türinnenteils 8 befestigt werden.

Die Bauteile der ersten Türbaugruppe sind vorzugsweise so aufgebaut und weisen solche Schweisspunkte auf, dass eine Roboter-Montage und -Schweissung möglich wird. So werden zuerst die zweischalig ausgeführten Bauteile wie die Scharniersäule 4, der Querträger 3 und der Türschachtträger 7 sowie das obere Türaussenteil 6 und die Schlosssäule 5 stoffschlüssig mit dem Türrahmen 2 verbunden. Durch die von den vertikalen Schenkeln 12 und 21 des Türrahmens 2 seitlich begrenzte Innen- und Aussenöffnung der Tür sind die Einbauaggregate (Fensterheber 10, Scheibe 11) am Querträger 3 montierbar. Das komplettierte Türinnenteil 8 wird zusammen mit dem unteren Türaussenteil 9 verbunden und durch die Rammschutzleiste 37 ergänzt zusammengebaut.

## Patentansprüche

1. Türsystem für ein Kraftfahrzeug, das im wesentlichen einen Grundrahmen mit einem Türinnen- (8) und -aussenteil (6, 9) umfasst, zwischen denen an einem mit dem Grundrahmen verbundenen Querträger (3) Einbauaggregate (10, 11) gehalten sind, wobei die Türteile zur Aufnahme von Scharnieren (16) und einem Schloss (22) ausgeführt sind, gekennzeichnet durch eine erste Türbaugruppe, die einen aus Träger und Säulenteilen (Türrahmen 2, Querträger 3, Scharniersäule 4, Schlosssäule 5, oberes Türaussenteil 6, Türschachtträger 7) bestehenden vormontierten Basiskörper (1) umfasst, dessen Einzelteile stoffschlüssig miteinander verbunden sind und eine zur Türinnen- und -aussenseite hin offene einteilige Tragstruktur zur Montage von innenliegenden Einbauaggregateteilen (Fensterhebeeinrichtung 10, Türscheibe 11) bilden und dass diese Tragstruktur über eine zweite, lösbar befestigte und aus einem Türinnenteil (8) und einem unteren Türaussenteil (9) bestehende Baugruppe aussen- und innenseitig kapselnd umschlossen ist.

2. Türsystem nach Anspruch 1, dadurch gekennzeichnet, dass das Türinnenteil (8) aus einer Kunststoffschale besteht, die mit dem unteren Türaussenteil (9) im Bereich eines unteren horizontalen Befestigungsabschnitts (29) und weiteren vertikal verlaufenden Befestigungsabschnitten (30, 31) über Schraubmittel (41) lösbar verbunden ist.

3. Türsystem nach den Ansprüchen 1 oder 2, dadurch gekennzeichnet, dass das Türaussenteil (9) in einer etwa horizontalen Längsebene (X-X) geteilt ausgeführt ist, wobei das obere Türaussenteil (6) integrierter unlösbarer Bestandteil des Basiskörpers (1) ist und das untere Türaussenteil (9) über eine Halteeinrichtung (32) am oberen Türaussenteil (6) lösbar befestigt wird.

4. Türsystem nach Anspruch 3, dadurch gekennzeichnet, dass das untere Türaussenteil (9) aus Kunststoff besteht und eine angeformte Randleiste (26) aufweist, die eine umlaufende Anlagefläche (27) für das Türinnenteil (8) bildet und zur Aufnahme von Befestigungsmuttern (28) ausgeführt ist.

5. Türsystem nach den Ansprüchen 3 oder 4, dadurch gekennzeichnet, dass das untere Türaussenteil (9) und das obere Türaussenteil (6) an ihrer in der Längsebene (X-X) verlaufenden Stosskante (36) die Halteeinrichtung (32) aufweisen, welche aus ineinandergreifend angeordnete U-profilförmigen Verbindungsleisten (33, 34) besteht.

6. Türsystem nach Anspruch 5, dadurch gekennzeichnet, dass das untere Türaussenteil (9) im Bereich der grössten Fahrzeugbreite die Verbindungsleisten (33 und 34) sowie eine benachbart angeordnete längsverlaufende, nach innen verlagerte Rinne (35) aufweist, in der eine Rammschutzleiste (37) gehalten ist, die aussenseitig mit einer elastischen Leiste (38) verbunden wird.

7. Türsystem nach Anspruch 6, dadurch gekennzeichnet, dass die elastische Leiste (38) eine die Stosskante (36) zwischen den beiden Türaussenteilen (6 und 9) abdeckende Bemessung aufweist.

8. Türsystem nach den Ansprüchen 6 oder 7, dadurch gekennzeichnet, dass die Rammschutzleiste (37) aus einem biegesteifen Träger besteht, der sich endseitig an der Tragstruktur abstützt und mit dem Türinnen- und aussenteil (8 und 9) zusammen befestigt wird.

9. Türsystem nach Anspruch 1 und einem oder mehreren der vorhergehenden Ansprüche, dadurch gekennzeichnet, dass der U-förmige Türrahmen (2) der ersten Baugruppe an seinem einen Schenkel (12) mit der Scharniersäule (4) und an seinem anderen Schenkel (21) mit der Schlosssäule (5) verbunden wird und zwischen diesen beiden Säulen (4 und 5) der Querträger (3) zur Aufnahme der Einbauaggregateteile (10) am Türrahmen (2) sowie an der Scharniersäule (4) und an der Schlosssäule (5) gehalten ist.

10. Türsystem nach Anspruch 9, dadurch gekennzeichnet, dass die Scharniersäule (4) zwei stoffschlüssig miteinander verbundene Halbschalen (13 und 14) umfasst, die einen Kastenträger bilden, der einen Halteschenkel (17) aufweist, welcher über den Verbindungsort (18) an der inneren Halbschale (14) hinausgeführt ist.

11. Türsystem nach den Ansprüchen 9 oder 10, dadurch gekennzeichnet, dass der Querträger (3) aus zwei miteinander verbundenen Halbschalen (19, 20) besteht, wobei die innere Halbschale (19) mit dem weitergeführten Halteschenkel (17) des einen Scharniersäulenteils (13) verbunden ist und die äussere Halbschale (20) an den Schenkeln (12 und 21) des Türrahmens (2) befestigt wird.

12. Türsystem nach einem oder mehreren der vorhergehenden Ansprüche, dadurch gekennzeichnet, dass das Türinnenteil (8) an seiner Innenseite Abstandsnocken (39) aufweist, die anliegend zur inneren Halbschale (19) des Querträgers (3) angeordnet sind und die Nocken (39) eine an der Halbschale (19) gehaltene Schraube (40) zum Befestigen des Türinnenteils (8) am Querträger (3) aufnehmen.

13. Türsystem nach einem oder mehreren der vorhergehenden Ansprüche, dadurch gekennzeichnet, dass mit dem oberen Türaussenteil (6) der zweischalige Türschachtträger (7) stoffschlüssig verbunden wird, wobei die äussere Trägerhalbschale (25) mit dem oberen Türaussenteil (6) verklebt ist.

14. Verfahren zur Herstellung einer Fahrzeugtür nach einem der vorherstehenden Ansprüche, dadurch gekennzeichnet, dass

a) die zweischalig ausgeführten Bauteile wie Scharniersäule (4), Querträger (3), Türschachtträger (7) sowie das obere einschalige Türaussenteil (6) und die Schlosssäule (5) stoffschlüssig mit dem Rahmen (2) verbunden werden,

b) durch die von den vertikalen Schenkeln (12, 21) des Türrahmens seitlich begrenzte Innen- und Aussenöffnung der Tür Einbauaggregate [Fensterhebeeinrichtung (10), Scheibe (11)] am Querträger (3) montierbar sind, und

c) das komplettierte Türinnenteil zusammen mit dem unteren Türaussenteil (9) verbunden und durch die Rammschutzleiste (37) ergänzt zusammengebaut wird.


**Claims**

1. A door system for a motor vehicle, substantially comprising a basic frame with a door inner part (8) and a door outer part (6, 9), between which fittings (10, 11) are held on a transverse support (3) connected to the basic frame, the door parts being adapted to receive hinges (16) and a lock (22), characterised by a first door assembly comprising a preassembled basic body (1) consisting of the support and pillar parts (door frame 2, transverse support 3, hinge pillar 4, lock pillar 5, upper door outer part 6, door shaft support 7), the components of the basic body (1) being connected together with material locking and forming a one-piece support structure, which is open with respect to the door inner and outer sides, for mounting internal fittings parts (window winding device 10, door pane 11), and the said support structure is encapsulated on the outside and inside, by a second, detachably mounted assembly consisting of a door inner part (8) and a lower door outer part (9).

2. A door system according to claim 1, characterised in that the door inner part (8) consists of a plastics shell which is detachably connected via screw fixings (41) to the lower door outer part (9) in the region of a lower horizontal fixing recess (29) and further vertically extending fixing recesses (30, 31).

3. A door system according to claims 1 or 2, characterised in that the door outer part (9) is formed separately in an approximately horizontal longitudinal plane (X-X), the upper door part (6) being an integral, inseparable component of the basic body (1) and the lower door outer part (9) being detachably fixed to the upper door outer part (6) via a holding device (32).

4. A door system according to claim 3, characterised in that the lower door outer part (9) consists of plastic and has an edge rail (26) formed thereon, which forms a continuous locating face (27) for the door inner part (8) and is designed for receiving fixing nuts (28).

5. A door system according to claims 3 or 4, characterised in that the lower door outer part (9) and the upper door outer part (6) have, on their abutment edge (36) extending in the longitudinal plane (X-X), the holding device (32), which consists of mutually engaging U-profile-shaped connecting strips (33, 34).

6. A door system according to claim 5, characterised in that the lower door outer part (9) has, in the region of the greatest vehicle width, the connecting strips (33, and 34) and an adjacent, longitudinally extending rim (35) displaced inwards, in which a ram protection rail (37) is held, the ram protection rail (37) being connected on the outside to an elastic strip (38).

7. A door system according to claim 6, characterised in that the elastic strip (38) is dimensioned so as to cover the abutment edge (36) between the two door outer parts (6 and 9).    .

8. A door system according to claims 6 or 7, characterised in that the ram protection rail (37) consists of a bending-resistant support bearing against the support structure at the end and fixed together with the door inner and outer parts (8 and 9).

9. A door system according to claim 1 and one or more of the preceding claims, characterised in that the U-shaped door frame (2) of the first assembly is connected by its one flange (12) to the hinge pillar (4) and by its other flange (21) to the lock pillar (5), and the transverse support (3) is held between these two pillars (4 and 5) in order to receive the fittings parts (10) on the door frame (2) and on the hinge pillar (4) and the lock pillar (5).

10. A door system according to claim 9, characterised in that the hinge pillar (4) comprises two half shells (13 and 14) connected together by material locking, the said half shells forming a box support having a holding flange (17), which is guided out over the connecting place (18) on the inner half shell (14).

11. A door system according to claims 9 or 10, characterised in that the transverse support (3) consists of two half shells (19, 20) connected together, the inner half shell (19) being connected to the continued holding flange (17) of the one hinge pillar part (13) and the outer half shell (20) being fixed to the flanges (12 and 21) of the door frame (2).

12. A door system according to one or more of the preceding claims, characterised in that door inner part (8) has distancing cams (39) on its inside, the said distancing cams being disposed abutting the inner half shell (19) of the transverse support (3), and the cams (39) receive a screw (40) held on the half shell (19) for fixing the door inner part (8) to the transverse support (3).

13. A door system according to one or more of the preceding claims, characterised in that the two-shelled door shaft support (7) is connected to the upper door outer part (6) by material locking, the outer support half shell (25) being glued to the upper door outer part (6).

14. A process for manufacturing a vehicle door according to one of the preceding claims, characterised in that,

a) the two-shelled components such as hinge pillar (4), transverse support (3), door shaft support (7) and the upper singleshell door outer part (6) and the lock pillar (5) are connected by material locking to the frame (2),

b) fittings [window winding device (10), screen (11)] are mounted by the inner and outer apertures of the door, which are laterally limited by the vertical flanges (12, 21) or the door frame, and

c) the completed door inner part is connected together with the lower door outer part (9) and is finished by the mounting of the ram protection rail (37).

## Revendications

1. Système de porte pour véhicule automobile, qui comprend essentiellement un cadre de base comportant une partie interne (8) et une partie externe (6, 9) de porte, entre lesquelles des dispositifs incorporés (10, 11) sont fixés sur une traverse (3) reliée au cadre de base, les parties de la porte étant constituées de manière à pouvoir recevoir des charnières (16) et une serrure (22), caractérisé par un premier groupe comprenant un corps de base (1) monté à l'avance et constitué par des longerons et des montants (cadre de porte 2, traverse 3, montant à charnières 4, montant à serrure 5, partie supérieure externe 6 de la porte, support d'interstice de porte 7), dont les éléments individuels sont reliés étroitement les uns aux autres, et forment une structure de support d'un seul tenant et ouverte en direction du côté interne et du côté externe de la porte en vue du montage d'éléments de dispositifs incorporés situés à l'inérieur (lève-glace 10, vitre de porte 11), et du fait que cette structure de support est complétée à la manière d'une capsule sur le côté externe et sur le côté interne par un second groupe fixé de façon amovible et constitué par une partie interne (8) de la porte et une partie inférieure externe (9) de cette porte.

2. Système de porte selon la revendication 1, caractérisé en ce que la partie interne (8) de la porte est constituée par une coquille en matière synthétique, qui est reliée de façon amovible à la partie inférieure externe de la porte par des boulons (41) dans la région d'une section de fixation horizontale inférieure (29) et d'autres sections de fixation (30, 31) orientées verticalement.

3. Système de porte selon la revendication 1 ou 2, caractérisé en ce que la partie externe (9) de la porte est subdivisée dans un plan longitudinal sensiblement horizontal (X-X), la partie supérieure externe (6) de cette porte étant un élément inamovible et intégré au corps de base (1) et la partie inférieure (9) étant fixée de façon amovible à la partie supérieure externe (6) au moyen d'un dispositif de retenue (32).

4. Système de porte selon la revendication 3, caractérisé en ce que la partie inférieure externe (9) de la porte est constituée en matière synthétique et comprend une baguette de pourtour (26) qui forme une surface d'appui périphérique (27) pour la partie interne (8) de la porte, et est conformée pour recevoir des écrous de fixation (28).

5. Système de porte selon la revendication 3 ou 4, caractérisé en ce que la partie inférieure externe (9) de la porte et la partie supérieure externe (6) de cette porte comprennent sur leur arête (36) qui est orientée dans le plan longitudinal (X-X) le dispositif de fixation (32) constitué par des baguettes de liaison (33, 34) à profil en U et emboîtées l'une dans l'autre.

6. Système de porte selon la revendication 5, caractérisé en ce que la partie inférieure externe (9) de la porte comprend dans la région de la largeur maximale de véhicule les baguettes de liaison (33 et 34) ainsi qu'un élément à rainure voisin (35) décalé vers l'inérieur et orienté longitudinalement, dans lequel est retenue la baguette de protection contre des chocs (37) qui est reliée sur son côté externe à une baguette élastique (38).

7. Système de porte selon la revendication 6, caractérisé en ce que la baguette élastique (38) a une dimension lui permettant de recouvrir la baguette de protection contre des chocs (36) entre les deux parties externes (6 et 9) de la porte.

8. Système de porte selon la revendication 6 ou 7, caractérisé en ce que la baguette de protection contre des chocs (37) est constituée par un longeron rigide en flexion, qui s'appuie par ses extrémités contre la structure de support et qui est fixé en même temps aux parties interne et externe (8 et 9) de la porte.

9. Système de porte selon la revendication 1 et l'une ou plusieurs des revendications précécdentes, caractérisé en ce que le cadre de porte en forme de U (2) du premier groupe est relié par l'une de ses branches (12) au montant à charnières (4) et par l'autre de ses branches (21) au montant à serrure (5) et en ce qu'entre ces deux montants (4 et 5) la traverse (3) destinée au montage des éléments des dispositifs incorporés (10) est montée sur le cadre (2) de la porte ainsi que sur le montant à charnières (2) et sur le montant à serrure (5).

10. Système de porte selon la revendication 9, caractérisé en ce que le montant à charnières (4) comprend deux demi-coquilles (13 et 14) reliées étroitement l'une à l'autre, qui forment un longeron en caisson comprenant une branche de fixation (17) se prolongeant au-delà de l'emplacement de liaison (18) avec la demi-coquille interne (14).

11. Système de porte selon la revendication 9 ou 10, caractérisé en ce que la traverse (3) est constituée par deux demi-coquilles (19, 20) reliées l'une à l'autre, la demi-coquille interne (19) étant reliée à la branche de retenue prolongée (17) de l'une des parties du montant à charnières (13) et la demi-coquille externe (20) étant fixée aux branches (12 et 21) du cadre (2) de la porte.

12. Système de porte selon une ou plusieurs des revendications des revendications précédentes, caractérisé en ce que la partie (8) de la porte comprend sur son côté interne des butées d'écartement (39) disposées de façon à l'appliquer contre la demi-coquille interne (19) de la traverse (3) et en ce que les butées (29) reçoivent un boulon (40) fixé à la demi-coquille (19) en vue de la fixation de la partie interne (8) de la porte sur la traverse (3).

13. Système de porte selon une ou plusieurs des revendications précédentes, caractérisé en ce que le support d'interstice de porte à deux coquilles (7) est relié étroitement à la partie supérieure externe (6) de la porte, la demi-coquille externe (25) du support étant collé à la partie supérieure externe (6) de la porte.

14. Procédé pour réaliser une porte de véhicule selon l'une quelconque des revendications précédentes, caractérisé en ce que

a) les éléments composants constitués sous forme de deux coquilles, tels que le montant à charnières (4), la traverse (3), le support d'interstice de porte (7) ainsi que la partie supérieure externe de la porte à coquille unique (6) et le montant à serrure (5) sont reliés étroitement au cadre (2),

b) les dispositifs incorporés [lève-glace (10), vitre (11)] peuvent être montés sur la traverse (3) en passant par l'ouverture interne et externe de la porte limitée latéralement par les branches verticales (12, 21) du cadre de la porte, et

c) la partie interne complétée de la porte est reliée à la partie inférieure externe (9) de la porte et assemblée et terminée au moyen de la baguette de protection contre des chocs (37).

FIG.1

FIG.2

7

FIG.3

FIG.5

FIG.4

FIG.6

FIG.7

FIG.8